# FASCICULE DE BREVET EUROPEEN

(11) **EP 0 581 689 B1**
(45) Date de publication et mention de la délivrance du brevet: **31.03.1999**
(21) Numéro de dépôt: 93401985.2
(22) Date de dépôt: 30.07.1993
(51) Int. Cl.: H04Q 3/70, H04M 3/50, H04M 3/38, G07F 7/08

(54) **Procédé et système de communication entre un équipement appelant et un équipement appelé via un autocommutateur**
Kommunikationsverfahren und -system zwischen einer anrufenden Anordnung und einer angerufenen Anordnung über eine Vermittlungsanlage
Communication method and system between a calling equipment and a called equipment via a telephone exchange

(30) Priorité: 31.07.1992 FR 9209558
(43) Date de publication de la demande: 02.02.1994
(73) Titulaire: SMART INGENIERIE, F-26000 Valence (FR)
(72) Inventeur: Klebanovas, Marc, F-69009 Lyon (FR)
(74) Mandataire: Schrimpf, Robert

(56) Documents cités:
- WO-A-86/01323
- DE-A- 2 134 125
- DE-A- 3 901 793
- GB-A- 2 211 050
- US-A- 5 029 196
- PATENT ABSTRACTS OF JAPAN vol. 14, no. 239 (E-930)21 Mai 1990 & JP-A-2 063 354 ( TOSHIBA CORP ) 2 Mars 1990
- IBM TECHNICAL DISCLOSURE BULLETIN vol. 26, no. 5, Octobre 1983, NEW YORK US pages 2645 - 2647 D.ZEHEB 'SECRETARIAL BRANCH EXCHANGE'

## Description

La présente invention a trait d'une façon générale aux dispositifs capables d'être connectés sur un réseau téléphonique en vue de gérer l'accueil d'appels téléphoniques, d'effectuer l'identification et/ou l'authentification de l'appelant, et d'effectuer ensuite un routage de l'appel vers un autre poste connecté au réseau.

Dans l'état de la technique, il n'existe à l'heure actuelle aucun dispositif capable d'effectuer, de façon automatique et transparente pour les utilisateurs, les trois fonctions définies ci-dessus sur un réseau téléphonique ordinaire.

Et c'est seulement sur les réseaux numériques dits à valeur ajoutée, par exemple le réseau Transpac (marque déposée) ou autre, qu'il existe des appareils capables d'offrir ce genre de fonction.

Pour revenir aux réseaux téléphoniques, on connaît bien entendu des dispositifs capables d'effectuer l'accueil d'appels : il s'agit notamment des appareils répondeurs téléphoniques ou télématiques. Mais il n'existe dans ce cas aucune identification de l'appelant, et la correspondance n'est pas obtenue car aucun routage ou transfert n'est réalisé.

On connaît deux systèmes de routage des plus classiques; dans le cas du standard téléphonique vocal, où les fonctions d'accueil, d'identification et de routage sont effectuées manuellement par une standardiste. Dans le cas d'un autocommutateur, seul le routage est assuré, vers un poste appelé prédéterminé.

Enfin d'autres dispositifs connus sont conçus pour effectuer une identification de l'appelant, Il s'agit notamment des modems dans lesquels est implémenté un protocole de reconnaissance mutuelle. Ce genre de modem est cependant branché sur le réseau en coupure de ligne, c'est-à-dire que l'appelant ne peut obtenir qu'un seul correspondant. Il n'existe donc pas de routage. En outre, dans le cas où le modem est branché sur une ressource multi-utilisateur (cas notamment des serveurs informatiques), du fait de ce branchement en coupure de ligne, la mise en communication du modem bloque la ligne et personne d'autre ne peut se connecter. Seule une multiplication des matériels permet la connexion simultanée de plusieurs utilisateurs.

En outre, le plus souvent, ce genre de système effectue une identification de l'équipement appelant, et non de l'utilisateur lui-même.

Pour pallier cette limitation, on connaît certes par le document JP-A-2063354 un terminal associé à l'équipement appelant et pourvu d'un lecteur de carte à mémoire permettant d'identifier non pas l'équipement appelant, mais l'utilisateur lui-même, par son propre numéro d'abonné.

Les enseignements de ce document n'apportent toutefois aucune réponse au problème consistant à combiner, à chaque communication, une identification ou une authentification de l'utilisateur appelant et un routage de l'appel entrant vers les services appropriés.

On connaît bien par le document US-A-5,029,196 un dispositif capable d'intercepter les appels entrants et d'effectuer ensuite le routage approprié. Ce document correspond au préambule de la revendication 7.

Ce dispositif présente toutefois l'inconvénient majeur de se placer, en coupure, entre la ou les lignes du réseau public commuté et l'autocommutateur via lequel, après identification, l'appel sera acheminé.

Ainsi la mise en oeuvre de ce dispositif nécessite une intervention et un câblage spécifiques au niveau de l'arrivée des lignes publiques sur l'autocommutateur d'une entreprise ou autre, ce qui est lourd et coûteux.

La présente invention a pour but de pallier les limitations des équipements existants, et de proposer un procédé d'établissement de communications et un système de communication qui cumulent les avantages suivants :
- possibilité d'identifier non pas un équipement appelant (par son numéro d'abonné sur le réseau public), mais directement un utilisateur appelant;
- mise en jeu d'une procédure d'identification ou d'authentification préalable sur la base de l'identificateur de l'utilisateur;
- mise en oeuvre d'une fonction d'accueil et de routage d'appels entrants à l'aide d'un équipement qui puisse être simplement branché sur une ligne intérieure ou privée d'un autocommutateur, ce dernier étant raccordé de la façon habituelle au réseau téléphonique public.

L'invention propose à cet effet, selon un premier aspect, un procédé d'établissement d'une communication téléphonique tel que défini dans la revendication 1.

Selon un second aspect de l'invention, elle propose un système de communication entre un équipement appelant et un équipement appelé tels que défini dans la revendication 7.

Un avantage essentiel de la présente invention réside en ce qu'elle peut être mise en oeuvre extrêmement simplement sur une installation pré-existante, par simple connexion à celle-ci d'un dispositif de lecture d'identificateur au niveau de l'équipement appelant, et d'un dispositif d'accueil et de routage au niveau de l'équipement appelé.

Des aspects préférés, mais non limitatifs, de la présente invention sont définis dans les revendications dépendantes.

D'autres aspects, buts et avantages de la présente invention apparaîtront mieux à la lecture de la description détaillée suivante d'un mode de réalisation préféré de celle-ci, donnée à titre d'exemple et faite en référence au dessin annexé, sur lequel:
la figure 1 est un synoptique général d'un système de communication sur réseau téléphonique selon la présente invention,
la figure 2 est un schéma-bloc illustrant l'architecture d'un dispositif équipant le système selon la présente invention,
la figure 3 est un chronogramme illustrant le comportement des équipements intervenant dans le système de communication selon la présente invention, et
la figure 4 est un synoptique d'un système de communication selon la présente invention dans une application particulière.

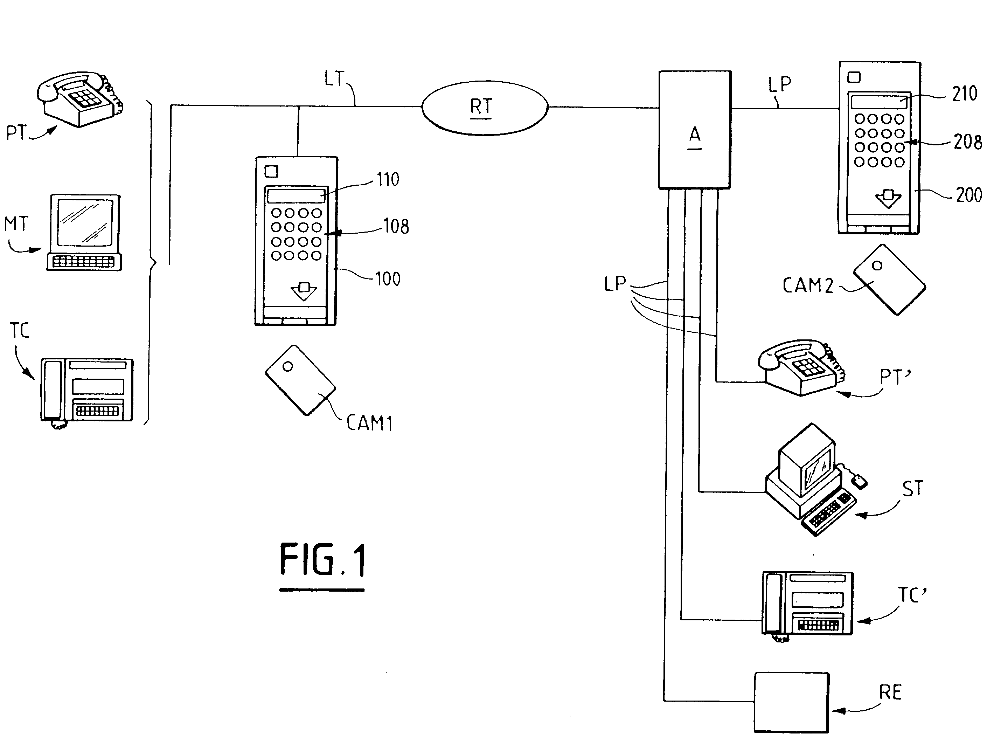

En référence tout d'abord à la figure 1, on a représenté un réseau téléphonique RT, notamment le réseau téléphonique public, auquel est connecté un équipement appelant qui peut être par exemple, un poste téléphonique PT, un terminal de type "Minitel" (marque déposée) MT, un télécopieur TC, ou encore un numéroteur (appartenant par exemple à une centrale d'alarme, un micro-ordinateur pourvu d'un modem, ou tout autre type d'équipement destiné à effectuer des appels sur le réseau RT. Sur la ligne du poste PT est également branché, en parallèle, un premier dispositif selon l'invention, indiqué en 100.

Un autocommutateur A est également branché sur le réseau RT, et derrière cet autocommutateur sont eux-mêmes branchés, sur les lignes intérieures ou privées LP de celui-ci, une pluralité d'équipements appelés tels que postes téléphoniques PT', serveur télématique ST équipé d'un modem, télécopieurs TC', répondeurs-enregistreurs RE, ou encore des terminaux de type "Minitel", un serveur vocal, etc...

Un deuxième dispositif 200 est également branché sur l'autocommutateur, par une autre ligne LP.

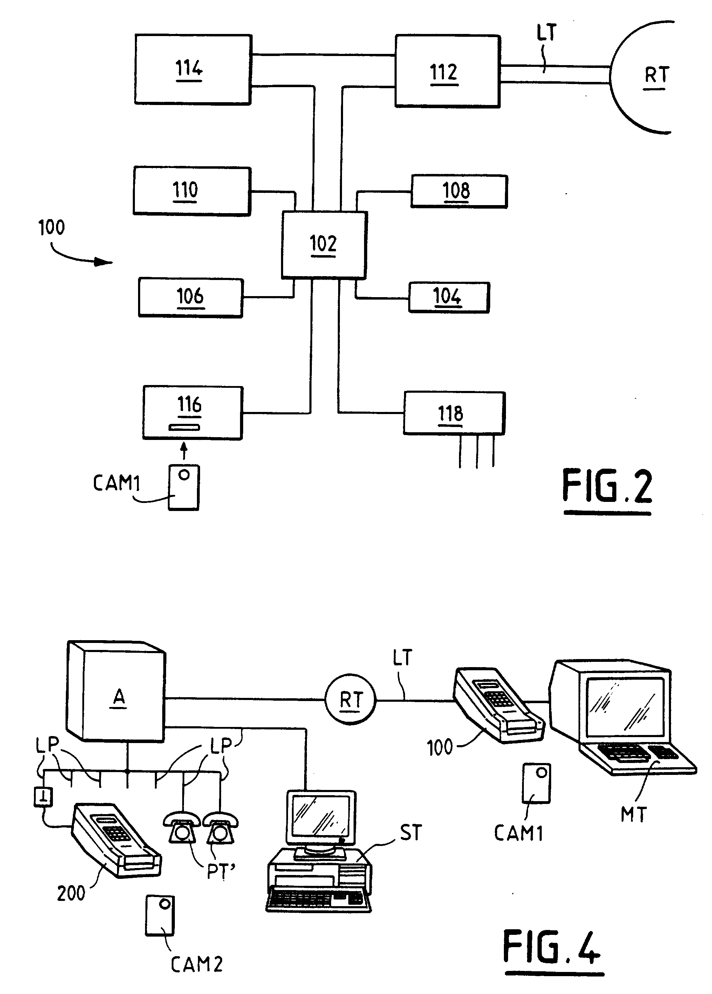

En référence maintenant à la figure 2, on a représenté schématiquement un exemple de réalisation du dispositif 100, quant à son aspect physique.

Le dispositif 100 est construit autour d'une unité logique 102 constituée de préférence par un microcontrôleur. Celui-ci est équipé de mémoires vives et de mémoires mortes (la mémoire morte contenant un programme d'exploitation), globalement indiquées en 104. Une horloge 106 cadence le fonctionnement de l'unité logique 102. Il est prévu en outre de préférence un clavier 108, un afficheur à cristaux liquides 110, un circuit 112 d'interface avec la ligne téléphonique LT, un circuit 114 de gestion de dialogue en fréquences vocales par exemple selon le protocole standard Q23, ainsi qu'un dispositif 116 de lecture de carte ou badge, notamment un lecteur de carte à microprocesseur CAM1.

Optionnellement, le dispositif 100 peut également comprendre un circuit 118 d'interface avec des capteurs, à des fins expliquées plus loin.

Le dispositif 200 peut être construit physiquement de la même manière que le dispositif 100, et ses composants seront désignés dans la suite par des références ayant les mêmes chiffres des dizaines et des unités, et un chiffre des centaines égal à 2. Le dispositif 200 contient cependant dans sa mémoire morte un programme d'exploitation différent, comme on le verra plus loin.

Par exemple, la partie matérielle du dispositif 100 peut être réalisé à partir de circuits à microcontrôleur et d'interface de ligne téléphonique commercialisés par la Demanderesse sous les références KT500P et SEMT, respectivement, le circuit SEMT incorporant des moyens de dialogue par signaux à fréquences vocales selon le protocole normalisé Q23. Le dispositif 200 peut être réalisé à partir des mêmes composants.

En outre, les cartes à microprocesseur CAM1 et CAM2 sont de préférence des cartes incorporant l'algorithme d'authentification standard dit DES.

Bien entendu, dans une configuration réelle, on trouvera un grand nombre d'équipements appelants PT, TC, MT, ... équipés chacun d'un dispositif 100. De même, plusieurs autocommutateurs peuvent être connectés au réseau RT et être chacun équipé d'un dispositif 200.

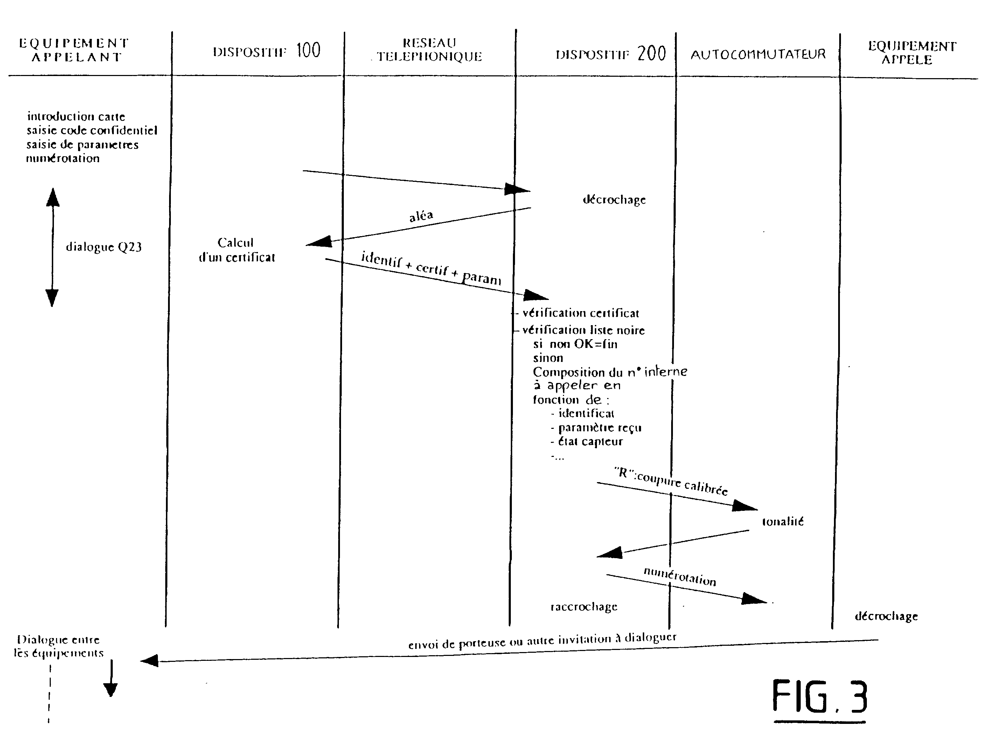

On va maintenant décrire en référence aux figures 1 à 3 le fonctionnement et l'utilisation du système décrit. La figure 3, par souci de simplification, est à considérer comme incluse dans la présente description.

Avant toute opération, l'utilisateur de l'équipement appelant PT, MT, TC, ... doit introduire une carte à microprocesseur CAM1 qui lui est personnelle dans la partie lecteur 116 du dispositif 100. Le cas échéant, le dispositif 100 lui demande de saisir son code confidentiel sur le clavier à des fins de vérification. Ces techniques sont usuelles et ne seront pas décrites en détail.

L'utilisateur appelant compose alors soit sur le clavier de l'équipement appelant, s'il en est pourvu, soit sur le clavier du dispositif associé 100, le numéro de correspondant demandé. Il peut s'agir par exemple, dans le cas où l'équipement appelé est connecté à un autocommutateur privé, d'un numéro permettant la sélection directe à l'arrivée (SDA).

La connexion est alors établie, via le réseau RT et l'autocommutateur A et à l'aide de la numérotation SDA, avec le dispositif 200.

Les dispositifs 100 et 200 sont conçus et programmés pour pouvoir alors dialoguer, par exemple à l'aide de signaux à fréquences vocales selon le protocole standard Q23, de façon tout à fait classique en soi.

Ce dialogue, dont un exemple sera explicité dans la suite, est destiné principalement à permettre au dispositif 200 de vérifier que l'utilisateur appelant est un utilisateur identifié et/ou habilité. Ce dialogue peut également être mis à profit pour transférer des paramètres entre les dispositifs connectés 100 et 200.

Dans le cas où l'utilisateur au niveau du poste PT n'est pas reconnu ou habilité, alors le dispositif 200 raccroche purement et simplement, après avoir éventuellement envoyé au dispositif 100 un message de refus de communication, que celui-ci peut afficher sur son afficheur .

Dans le cas où l'utilisateur appelant est identifié et habilité, alors le dispositif 200, par un processus entièrement classique de transfert d'appel par numérotation interne, effectue un routage de l'appel provenant du poste PT vers un poste connecté derrière l'autocommutateur, comme on le verra en détail plus loin. Le numéro interne pour le transfert peut être déterminé soit à partir de paramètres transférés du dispositif 100 vers le dispositif 200, soit par consultation d'une table stockée dans sa mémoire et à laquelle on accède par exemple à l'aide du numéro d'identification de l'utilisateur appelant.

Ainsi le dispositif 200 possède la triple fonction d'accueillir les appels extérieurs, de vérifier l'identification ou l'habilitation de l'utilisateur appelant, et de router l'appel vers un poste approprié, prédéterminé ou déterminé par le dispositif 200 lui-même.

On notera ici que, dès que le dispositif 200 a effectué le transfert d'appel, il raccroche automatiquement. Il devient donc immédiatement libre pour l'accueil d'autres appels.

Après avoir décrit ci-dessus le principe de fonctionnement du système selon l'invention, on va maintenant décrire de façon plus détaillée certaines fonctionnalités des dispositifs 100 et 200.

Le dispositif 100 est de préférence automatiquement mis en route lors de l'insertion d'une carte à microprocesseur dans son lecteur 116. Comme on l'a vu, le dispositif 100 peut être programmé pour demander à l'utilisateur de saisir son code confidentiel, pour vérification. La numérotation au niveau de l'ensemble équipement appelant/dispositif 100 peut être effectuée soit de façon manuelle par l'utilisateur, soit de façon automatique à partir notamment d'informations mémorisées dans la carte à microprocesseur CAM1 de l'utilisateur.

La procédure d'authentification faite par le dispositif 200 peut met en jeu de préférence les étapes suivantes :
- envoi par le dispositif 200 au dispositif 100 d'un numéro aléatoire ou aléa;
- calcul algorithmique, dans la carte CAM1 (ou le cas échéant dans le dispositif 100), à partir de l'aléa reçu et de l'identificateur contenu dans la mémoire de ladite carte, d'un certificat;
- envoi de ce certificat, et de l'identificateur, au dispositif 200 par le dispositif 100;
- vérification du certificat dans une carte à microprocesseur CAM2 insérée dans le dispositif 200. Cette vérification s'effectue de préférence en faisant effectuer à la carte CAM2 le même calcul algorithmique, mettant en jeu l'aléa qui a été envoyé précédemment au dispositif 100 et l'identificateur reçu dudit dispositif 100, et comparaison entre le certificat calculé et celui reçu du dispositif 100.

En variante, la vérification de certificat pourrait être effectuée dans le dispositif 200 lui-même.

Optionnellement, on peut mettre à profit la communication entre les dispositifs 100 et 200 pour transmettre au dispositif 200, à partir du dispositif 100, des paramètres par exemple introduits sur le clavier 108 (notamment demande d'un service particulier), ou des paramètres dérivés du comportement d'éventuels capteurs (alarmes, ...) reliés à l'interface de capteurs 118 du dispositif 100.

Outre ce qui a été décrit ci-dessus, les fonctionalités du dispositif 200 peuvent être par exemple les suivantes :
- réponse (décrochage) automatique lors d'un appel à partir d'un dispositif 100;
- contrôle d'une liste noire, c'est-à-dire d'une liste des numéros d'identification d'utilisateurs ne devant pas avoir accès aux équipements appelés PT', ST, TC', etc...; ceci à l'aide de la carte CAM2.
- caractère paramétrable du transfert d'appel : les numéros internes pour transfert d'appel par le dispositif 200 sont dans ce cas mémorisés dans une mémoire vive du dispositif 200, et peuvent être modifiés à la demande par un opérateur habilité;
- choix du numéro interne de transfert en fonction :
   * de l'identificateur de l'utilisateur appelant;
   * des droits inscrits dans la carte CAM1 de l'utilisateur appelant, ces droits inscrits pouvant être transférés du dispositif 100 vers le dispositif 200 sous forme d'un paramètre;
   * de tout autre paramètre transmis par l'utilisateur appelant, et par exemple composé sur le clavier 108 du dispositif 100;
   * de la date ou de l'heure courante;
   * des informations (paramètres) dérivés du comportement des capteurs reliés à l'interface 118 du dispositif 100;
   * d'une intervention manuelle sur le dispositif 200.

La figure 4 illustre une application particulière du système de la présente invention. Le dispositif 100 est associé à un "Minitel" pour consultation de serveurs télématiques. Sur l'autocommutateur A est connecté un serveur télématique ST, qui possède de préférence une pluralité de modems reliés à l'autocommutateur par plusieurs lignes.

Par les procédures décrites plus haut, le dispositif de sécurité 200 peut :
a) accueillir l'appel effectué à partir de l'ensemble équipement MT/dispositif associé 100;
b) vérifier si l'utilisateur appelant est ou non habilité à accéder au serveur télématique ST,
c) dans l'affirmative, router l'appel vers l'une des lignes LP disponibles pour l'accès au serveur, puis se libérer pour un autre appel en raccrochant. Dans ce cas, le dispositif 200 est préférentiellement programmé de manière à assurer une allocation dynamique des lignes libres connectées au serveur, d'une manière qui en soi est classique.

Une fois ces opérations effectuées, l'utilisateur n'a plus qu'à appuyer sur une touche "Connexion" de son terminal MT, qui se met dans l'attente de la porteuse issue du serveur ST.

Dans le cas d'une telle application de l'invention, il est envisageable de gérer les accès et d'effectuer une facturation des services rendus par le serveur ST non pas par numéro d'appelant, mais par numéro d'utilisateur.

Dans cette application, la gestion de la liste noire est avantageusement effectuée de la façon suivante : lorsque l'administrateur du serveur ST a été averti de la perte ou du vol d'une carte de type CAM1 (carte utilisateur), il introduit la carte CAM2 dans le lecteur 216 du dispositif 200, et compose sur le clavier 208 un code confidentiel donnant accès à la gestion de la liste noire. Le dispositif 200 peut être programmé pour offrir alors à l'administrateur un menu permettant d'ajouter ou de supprimer un article dans la liste noire. Cette liste est de préférence stockée dans la carte CAM2, mais transférée temporairement dans la mémoire 204 du dispositif 200 pour les modifications. Après celles-ci, la nouvelle liste est chargée dans la carte CAM2.

En outre, il est avantageux, par souci notamment de rapidité d'accès, que la liste noire soit importée dans la mémoire 204 pendant l'exploitation normale, de manière à ce que le dispositif 200 puisse lors de chaque appel vérifier par lui-même que l'identificateur de l'utilisateur appelant n'est pas contenu dans cette liste. Si c'est le cas, alors le dispositif 200 envoie au dispositif 100 un message de refus, et raccroche.

Bien entendu, la présente invention n'est nullement limitée à la forme de réalisation décrite ci-dessus et représentée sur les dessins, mais l'homme de l'art saura y apporter toute variante ou modification entrant dans le cadre des revendications annexées.

En particulier, les concepts de la présente invention peuvent être appliqués à la mise en communication d'un équipement appelant et d'un équipement appelé conversant selon tout type de flux : voix, données (tout type de protocole étant envisageable), mélange voix/données, fréquences vocales (notamment au standard Q23),...

Outre l'application particulière représentée sur la figure 4, l'invention peut être avantageusement utilisée notamment pour :
- la gestion sécurisée de l'accès à des équipements informatiques ou télématiques, notamment à des fins de télémaintenance;
- l'accès restreint à certains postes téléphoniques;
- la gestion des droits de numérotation (urbain, interurbain, international) par utilisateur appelant et non par poste appelant comme c'est habituellement le cas;
- la restriction des accès à un télécopieur, notamment pour éviter la réception de télécopies publicitaires ou autres ayant pour origine des tiers non habilités.

On notera ici que la gestion des droits de numérotation par utilisateur peut s'effectuer, suivant la présente invention, de la manière suivante : l'utilisateur qui souhaite faire un appel international (en France, par le "19"), effectue normalement, sur un poste relié directement à une ligne LP de l'autocommutateur (et non pas via le réseau RT comme c'était le cas dans les exemples précédents), la numérotation correspondante. Le dispositif 100, reconnaissant la présence du "19", établit la communication avec le dispositif de supervision 200. Au cours de l'identification/authentification de l'utilisateur, le numéro composé par l'utilisateur, qui a été mémorisé dans le dispositif 100, est transmis par ce dernier au dispositif 200 sous forme d'un paramètre. Enfin le dispositif 200, après avoir vérifié dans la mémoire de la carte CAM2 que l'utilisateur de la carte CAM1 est habilité à effectuer des appels à l'étranger, compose lui-même le numéro, effectue le transfert, puis raccroche.

Dans une telle application, la carte à microprocesseur de supervision CAM2 tient donc dans sa mémoire une liste à jour des identificateurs d'utilisateurs habilités (ou au contraire non habilités) à effectuer des appels interurbains, internationaux...).

## Revendications

1. Procédé d'établissement d'une communication téléphonique entre un équipement appelant (PT; MT; TC) relié à un réseau téléphonique (RT) et un équipement appelé (PT'; ST; TC' ; RE) relié à une ligne intérieure d'un autocommutateur (A) lui-même relié directement audit réseau téléphonique (RT), caractérisé en ce qu'il comprend les étapes suivantes :
(a) on prévoit en parallèle sur la ligne de l'équipement appelant un dispositif de lecture (100) équipé d'un moyen (116) de lecture d'un identificateur associé à un utilisateur appelant et inscrit sur une carte d'identification ou d'authentification (CAM1);
(b) on prévoit un dispositif d'accueil et de routage relié à une autre ligne intérieure de l'autocommutateur (A),
(c) on lit à l'aide du dispositif de lecture, l'identificateur d'un utilisateur souhaitant connecter l'équipement appelant à l'équipement appelé,
(d) on effectue à l'aide de l'équipement appelant ou du dispositif de lecture associé à celui-ci une numérotation identifiant le dispositif d'accueil et de routage (200) en vue d'établir une communication entre le dispositif de lecture (100) et le dispositif d'accueil et de routage (200) via le réseau téléphonique (RT) et l'autocommutateur (A),
(d') on décroche le dispositif d'accueil et de routage,
(e) on effectue au cours de la communication établie, au moins à l'aide du dispositif d'accueil et de routage (200), une identification et/ou une authentification de l'utilisateur appelant,
(f) dans le cas où l'identification ou l'authentification aboutit, on effectue, par numérotation au niveau du dispositif d'accueil et de routage (200), un transfert d'appel vers l'équipement appelé via l'autocommutateur (A), pour ainsi établir une communication entre l'équipement appelant et l'équipement appelé, puis on raccroche le dispositif d'accueil et de routage (200),
(g) dans le cas où l'identification ou l'authentification n'aboutit pas, on n'effectue aucun transfert, et on raccroche du dispositif d'accueil et de routage (200),
le dispositif d'accueil et de routage devenant alors, dans les deux cas (f) et (g), libre pour la réception d'appels provenant d'autres équipements appelants auxquels est également associé un dispositif de lecture.

2. Procédé selon la revendication 1, caractérisé en ce que l'étape (c) est réalisée par une opération de lecture d'une carte à microprocesseur (CAM1) associée à un utilisateur.

3. Procédé selon la revendication 2, caractérisé en ce que l'étape (e) est réalisée par les sous-étapes suivantes :
(i) envoi au dispositif de lecture (100) par le dispositif d'accueil et de routage d'un nombre aléatoire;
(ii) calcul, par la carte à microprocesseur (CAMl) associée à l'utilisateur, d'un premier certificat sur la base dudit nombre aléatoire et d'un identificateur contenu dans ladite carte,
(iii) envoi au dispositif d'accueil et de routage (200), par le dispositif de lecture, dudit certificat et dudit identificateur,
(iv) calcul identique, dans ledit dispositif d'accueil et de routage, d'un second certificat sur la base dudit nombre aléatoire et dudit identificateur, et
(v) comparaison, par le dispositif d'accueil et de routage (200), des premier et second certificats.

4. Procédé selon la revendication 3, caractérisé en ce que la sous-étape (iv) est effectuée dans une carte à microprocesseur de supervision (CAM2) introduite dans un lecteur de carte à microprocesseur (216) faisant partie du dispositif d'accueil et de routage (200).

5. Procédé selon l'une des revendications 1 à 4, caractérisé en ce que l'étape (f) est réalisée à l'aide d'un numéro de transfert déterminé par le dispositif d'accueil et de routage (200) à partir d'au moins une information choisie dans le groupe comprenant l'identificateur associé à l'utilisateur appelant, un paramètre transmis par le dispositif de lecture au dispositif d'accueil et de routage, et un paramètre contenu dans le dispositif d'accueil et de routage.

6. Procédé selon l'une des revendications 1 à 5, caractérisé en ce que la communication entre les deux dispositifs (100, 200) s'effectue par signaux à fréquences vocales.

7. Système de communication entre un équipement appelant (PT; MT; TC) relié à un réseau téléphonique (RT) et un équipement appelé (PT'; ST; TC'; RE) relié à une ligne intérieure (LP) d'un autocommutateur (A) lui-même relié audit réseau téléphonique, du type comprenant :
- un dispositif d'accueil et de routage (200) connecté à l'autocommutateur (A),
- des moyens (202, 212) prévus dans le dispositif d'accueil et de routage (200) pour effectuer un décrochage lorsqu'il est appelé par un équipement appelant, de manière à établir une communication entre l'équipement appelant et le dispositif d'accueil et de routage,
- des moyens (102, 116, CAM1; 202; 216, CAM2) prévus dans le dispositif d'accueil et de routage (200) pour permettre à ce dernier d'établir au cours de cette communication une identification et/ou une authentification de l'utilisateur appelant ;
- des moyens (202, 212, 214) prévus dans le dispositif d'accueil et de routage pour effectuer dans le cas où l'identification et/ou l'authentification a abouti avec succès, un transfert de l'appel vers l'équipement appelé via l'autocommutateur, et
- des moyens pour raccrocher le dispositif d'accueil et de routage (200) soit en cas de non établissement de l'identification ou de l'habilitation, soit après le transfert vers l'équipement appelé, pour ainsi libérer le dispositif d'accueil et de routage et lui permettre de recevoir des appels provenant d'autres équipements appelants auxquels est également associé un dispositif de lecture,
le système étant caractérisé en ce qu'il comprend en outre :
- un dispositif de lecture et d'émission d'appels (100), connecté en parallèle sur la ligne (LT) de l'équipement appelant;
- des moyens prévus (102, 116) dans le dispositif de lecture et d'émission d'appels pour effectuer la lecture d'une carte (CAM1) contenant une information associée à un utilisateur appelant, laquelle information est utilisée pour son identification et/ou son authentification,
- des moyens (102, 112, 114) prévus dans le dispositif de lecture et d'émission d'appels pour effectuer, en réponse à une numérotation identifiant le dispositif d'accueil et de routage (200), l'appel de l'équipement appelant vers le dispositif d'accueil et de routage (200) via l'autocommutateur (A),
et en ce que :
- le dispositif d'accueil et de routage (200) est relié à une autre ligne intérieure de l'autocommutateur, et
- la communication entre le dispositif de lecture et d'émission d'appels (100) et le dispositif d'accueil et de routage (200) est établie via le réseau téléphonique (RT) et l'autocommutateur, reliés directement l'un à l'autre.

8. Système selon la revendication 7, caractérisé en ce que le dispositif de lecture et d'émission d'appels (100) comprend un moyen (116) de lecture d'une carte à microprocesseur (CAM1) d'utilisateur.

9. Système selon la revendication 7 ou 8, caractérisé en ce que le dispositif d'accueil et de routage comprend un moyen de lecture d'une carte à microprocesseur (CAM2) de supervision.

10. Système selon la revendication 9, rattachée à la revendication 8, caractérisé en ce que les moyens pour déterminer l'identité et/ou l'habilitation de l'utilisateur appelant comprennent :
(i) des moyens (202, 212) prévus dans le dispositif d'accueil et de routage pour envoyer au dispositif de lecture et d'émission d'appels (100) un nombre aléatoire,
(ii) des moyens prévus dans la carte *à* microprocesseur d'utilisateur (CAM1) pour calculer un premier certificat à partir dudit nombre aléatoire et d'un identificateur d'utilisateur contenu dans ladite carte à microprocesseur d'utilisateur,
(iii) des moyens (102, 112) prévus dans le dispositif de lecture et d'émission d'appels pour envoyer au dispositif d'accueil et de routage (200) ledit identificateur et ledit certificat,
(iv) des moyens prévus dans la carte à microprocesseur de supervision (CAM2) pour calculer un second certificat à partir dudit nombre aléatoire et de l'identificateur reçu du dispositif de lecture et d'émission d'appels,
(v) des moyens (202) prévus dans le dispositif d'accueil et de routage (200) pour comparer les premier et second certificats.

11. Système selon l'une des revendications 7 à 10, caractérisé en ce que les moyens de transfert d'appel comprennent des moyens (202) pour composer un numéro de transfert déterminé à partir d'au moins une information choisie dans le groupe comprenant l'identificateur associé à l'utilisateur appelant, un paramètre transmis par le dispositif de lecture et d'émission d'appels au dispositif d'accueil et de routage, et un paramètre contenu dans le dispositif d'accueil et de routage.

12. Système selon l'une des revendications 7 à 11, caractérisé en ce que le dispositif d'accueil et de routage (220) comprend en outre des moyens (202, 204) pour déterminer si l'identificateur d'utilisateur est contenu ou non dans une liste d'utilisateurs interdits.

13. Système selon la revendication 12, rattachée à la revendication 9, caractérisé en ce que ladite liste est mémorisée dans la carte à microprocesseur de supervision (CAM2).

14. Système selon l'une des revendications 7 à 13, caractérisé en ce que les deux dispositifs (100, 200) comprennent chacun des moyens (114; 214) pour communiquer par signaux à fréquences vocales.

15. Système selon l'une des revendications 7 à 14, caractérisé en ce que les moyens de décrochage sont des moyens de décrochage automatique.

## Patentansprüche

1. Verfahren zur Herstellung einer Telefonverbindung zwischen einer anrufenden Anordnung (PT; MT; TC), welche mit einem Telefonnetz (RT) verbunden ist, und einer angerufenen Anordnung (PT'; ST; TC'; RE), welche mit einer inneren Leitung einer Vermittlungsanlage (A) verbunden ist, welche selbst direkt mit dem Telefonnetz (RT) verbunden ist, dadurch gekennzeichnet, daß es die folgenden Schritte aufweist:
(a) parallel wird auf der Leitung der anrufenden Anordnung eine Lesevorrichtung (100) vorgesehen, welche mit einer Leseeinrichtung für einen Identifizierer ausgestattet ist, welcher einem anrufenden Benutzer zugeordnet und auf einer Identifikations- oder Authentisierungskarte (CAM1) eingetragen ist;
(b) es wird eine Annahme- und Leitwegienkungsvorrichtung vorgesehen, welche mit einer anderen inneren Leitung der Vermittlungsanlage (A) verbunden ist,
(c) mit Hilfe der Lesevorrichtung wird der Identifizierer eines Benutzers gelesen, welcher wünscht, die anrufende Anordnung mit der angerufenen Anordnung zu verbinden,
(d) mit Hilfe der anrufenden Anordnung oder der mit dieser verbundenen Lesevorrichtung wird eine Selbstwahl durchgeführt, welche die Annahme- und Leitweglenkungsvorrichtung (200) im Hinblick darauf identifiziert, eine Verbindung zwischen der Lesevorrichtung (100) und der Annahme- und Leitweglenkungsvorrichtung (200) über das Telefonnetz (RT) und die Vermittlungsanlage (A) herzustellen,
(d') die Annahme- und Leitweglenkungsvorrichtung wird abgenommen,
(e) im Verlauf der hergestellten Verbindung wird zumindest mit Hilfe der Annahme- und Leitweglenkungsvorrichtung (200) eine Identifizierung und/oder eine Authentisierung des anrufenden Benutzers durchgeführt,
(f) in dem Fall, wo die Identifizierung oder die Authentisierung zu Ende geführt wird, wird durch Selbstwahl auf der Ebene der Annahme- und Leitweglenkungsvorrichtung (200) ein Weiterverbinden über die Vermittlungsanlage (A) zu der angerufenen Anordnung hin durchgeführt, um so eine Verbindung zwischen der anrufenden Anordnung und der angerufenen Anordnung herzustellen, wonach die Annahme- und Leitweglenkungsvorrichtung (200) aufgelegt wird,
(g) in dem Fall, wo die Identifizierung oder die Authentisierung nicht zu Ende geführt wird, wird kein Weiterverbinden durchgeführt und die Annahme- und Leitweglenkungsvorrichtung (200) aufgelegt,
wobei die Annahme- und Leitweglenkungsvorrichtung somit in den beiden Fällen (f) und (g) frei wird für die Annahme von Anrufen, welche von anderen anrufenden Anordnungen kommen, welche ebenfalls mit einer Lesevorrichtung verbunden sind.

2. Verfahren gemäß Anspruch 1, dadurch gekennzeichnet, daß der Schritt (c) durch einen Lesevorgang einer einem Benutzer zugeordneten Mikroprozessorkarte (CAM1) durchgeführt wird.

3. Verfahren gemäß Anspruch 2, dadurch gekennzeichnet, daß der Schritt (e) durch die folgenden Unterschritte durchgeführt wird:
(i) Senden einer zufälligen Nummer durch die Annahme- und Leitweglenhungsvorrichtung an die Lesevorrichtung (100)
(ii) Berechnung durch die dem Benutzer zugeordnete Mikroprozessorkarte (CAM1) einer ersten Kennzeichnung auf der Basis der zufälligen Nummer und des in der Karte enthaltenen Identifizierers,
(iii) Senden der Kennzeichnung und des Identifizierers durch die Lesevorrichtung an die Annahme- und Leitweglenkungsvorrichtung (200),
(iv) identische Berechnung einer zweiten Kennzeichnung in der Annahme- und Leitweglenkungsvorrichtung auf der Basis der zufälligen Nummer und des Identifizierers, und
(v) Vergleich der ersten und zweiten Kennzeichnung durch die Annahme- und Leitweglenkungsvorrichtung (200).

4. Verfahren gemäß Anspruch 3, dadurch gekennzeichnet, daß der Unterschritt (iv) in einer Kontrollmikroporzessorkarte (CAM2) durchgeführt wird, welche in eine Mikroprozessorkartenlesevorrichtung (216) eingesteckt ist, die einen Bestandteil der Annahme- und Leitweglenkungsvorrichtung (200) bildet.

5. Verfahren gemäß einem der Ansprüche 1 bis 4, dadurch gekennzeichnet, daß der Schritt (f) mit Hilfe einer Weiterverbindungsnummer durchgeführt wird, welche von der Annahme- und Leitweglenkungsvorrichtung (200) bestimmt wurde anhand von zumindest einer aus der Gruppe mit dem dem anrufenden Benutzer zugeordneten Identifizierer ausgewählten Information, einem von der Lesevorrichtung an die Annahme- und Leitweglenkungsvorrichtung übermittelten Parameter und einem in der Annahme- und Leitweglenkungsvorrichtung enthalten Parameter.

6. Verfahren gemäß einem der Ansprüche 1 bis 5, dadurch gekennzeichnet, daß die Verbindung zwischen den beiden Vorrichtungen (100, 200) durch Sprachfiequenzsignale abläuft.

7. Kommunikationssystem zwischen einer anrufenden Anordnung (PT; MT; TC), welche mit einem Telefonnetz (RT) verbunden ist, und einer angerufenen Anordnung (PT'; ST; TC'; RE), welche mit einer inneren Leitung (LP) einer Vermittlungsanlage (A) verbunden ist, welche selbst mit dem Telefonnetz verbunden ist, der Art mit:
- einer Annahme- und Leitweglenkungsvorrichtung (200), welche an die Vermittlungsanlage (A) angeschlossen ist,
- Einrichtungen (202, 212), welche in der Annahme- und Leitweglenkungsvorrichtung (200) angeordnet sind, um ein Abheben durchzuführen, wenn von einer anrufenden Anordnung angerufen wird, derart, daß eine Verbindung zwischen der anrufenden Anordnung und der Annahme- und Leitweglenkungsvorrichtung hergestellt wird,
- Einrichtungen (102, 116, CAM1; 202; 216, CAM2), welche in der Annahme- und Leitweglenkungsvorrichtung (200) angeordnet sind, um dieser letzteren zu ermöglichen, im Verlauf dieser Verbindung eine Identifizierung und/oder eine Authentisierung des anrufenden Benutzers durchzuführen;
- Einrichtungen (202, 212, 214), welche in der Annahme- und Leitweglenkungsvorrichtung (200) angeordnet sind, um in dem Fall, wo die Identifizierung und/oder die Authentisierung mit Erfolg abgeschlossen wurde, ein Weiterverbinden des Anrufs über die Vermittlungsanlage an die angerufene Anordnung durchzuführen, und
- Einrichtungen, um die Annahme- und Leitweglenkungsvorrichtung (200) entweder im Fall der Nichtdurchführung der Identifizierung oder der Autorisierung oder nach dem Weiterverbinden an die angerufene Anordnung aufzulegen, um die Annahne- und Leitweglenkungsvorrichtung somit freizumachen und ihr zu ermöglichen, Anrufe, die von anderen anrufenden Anordnungen kommen, welche ebenfalls mit einer Lesevorrichtung verbunden sind, anzunehmen,
wobei das System dadurch gekennzeichnet ist, daß es außerdem aufweist:
- eine Lese- und Anrufweiterleitungsvorrichtung (100), welche parallel auf der Leitung (LT) der anrufenden Anordnung angeschlossen ist;
- Einrichtungen (102, 116), welche in der Lese- und Anrufweiterleitungsvorrichtung angeordnet sind, um das Lesen einer Karte (CAM1) durchzuführen, welche eine dem anrufenden Benutzer zugeordnete Information enthält, wobei die Information zu seiner Identifizierung und/oder seine Authentisierung verwendet wird,
- Einrichtungen (102, 112, 114), welche in der Lese- und Anrufweiterleitungsvorrichtung angeordnet sind, um, in Reaktion auf ein die Annahme- und Leitweglenkungsvorrichtung (200) identifizierendes Wählen, den Anruf der anrufenden Anordnung über die Vermittlungsanlage (A) zu der Annahme- und Leitweglenkungsvorrichtung (200) durchzuführen,
und dadurch, daß
- die Annahme- und Leitweglenkungsvorrichtung (200) mit einer anderen inneren Leitung der Vermittlungsanlage verbunden ist, und
- die Verbindung zwischen der Lese- und Anrufweiterleitungsvorrichtung (100) und der Annahme- und Leitweglenkungsvorrichtung (200) über ein Telefonnetz (RT) und die Vermittlungsanlage, welche direkt miteinander verbunden sind, durchgeführt wird.

8. System gemäß Anspruch 7, dadurch gekennzeichnet, daß die Lese- und Anrufweiterleitungsvorrichtung (100) eine Einrichtung (116) zum Lesen einer Benutzermikroprozessorkarte (CAM1) aufweist.

9. System gemäß Anspruch 7 oder 8, dadurch gekennzeichnet, daß die Annahme- und Leitweglenkungsvorrichtung (200) eine Einrichtung zum Lesen einer Kontrollmikroprozessorkarte (CAM2) aufweist.

10. System gemäß Anspruch 9, in Verbindung mit Anspruch 8, dadurch gekennzeichnet, daß die Einrichtungen zur Bestimmung der Identität und/oder Autorisierug des anrufenden Benutzers aufweisen:
(i) Einrichtungen (202, 212), welche in der Annahme- und Leitweglenkungsvorrichtung angeordnet sind, um der Lese- und Anrufweiterleitungsvorrichtung (100) eine zufällige Nummer zuzuleiten,
(ii) Einrichtungen, welche in der Benutzermikroprozessorkarte (CAM1) angeordnet sind, um eine erste Kennzeichnung ausgehend von der zufälligen Nummer und einem in der Benutzermikroprozessorkarte enthaltenen Benutzeridentifizierer zu berechnen,
(iii) Einrichtungen (102, 112), welche in der Lese- und Anrufweiterleitungsvorrichtung angeordnet sind, um der Annahme- und Leitweglenlkungsvorrichtung (200) den Identifizierer und die Kennzeichnung zuzuleiten,
(iv) Vorrichtungen, welche in der Kontrollmikroprozessorkarte (CAM2) angeordnet sind, um eine zweite Kennzeichnung ausgehend von der zufälligen Nummer und dem von der Lese- und Anrufweiterleitungsvorrichtung empfangenen Identifizierer zu berechnen,
(v) Vorrichtungen (202), welche in der Annahme- und Leitweglenkungsvorrichtung (200) angeordnet sind, um die erste und zweite Kennzeichnung zu vergleichen.

11. System gemäß einem der Ansprüche 7 bis 10, dadurch gekennzeichnet, daß die Anrufweiterverbindungseinrichtungen Einrichtungen (202) aufweisen, um eine Weiterverbindungsnummer zu wählen, welche ausgehend von zumindest einer aus der Gruppe mit dem dem anrufenden Benutzer zugeordneten Identifizierer ausgewählten Information, einem von der Lese- und Anrufweiterleitungsvorrichtung an die Annahme- und Leitweglenkungsvorrichtung übermittelten Parameter und einem in der Annahme- und Leitweglenkungsvorrichtung enthalten Parameter bestimmt wurde.

12. System gemäß einem der Ansprüche 7 bis 11, dadurch gekennzeichnet, daß die Annahme- und Leitweglenkungsvorrichtung (200) außerdem Einrichtungen (202, 204) aufweist, um zu bestimmen, ob der Benutzendentifizierer in einer Liste verbotener Benutzer enthalten ist oder nicht.

13. System gemäß Anspruch 12, in Verbindung mit Anspruch 9, dadurch gekennzeichnet, daß die Liste in der Kontrollmikroprozesserkarte (CAM2) gespeichert ist.

14. System gemäß einem der Ansprüche 7 bis 13, dadurch gekennzeichnet, daß die beiden Vorrichtungen (100, 200) jeweils Einrichtungen (114; 214) aufweisen, um durch Sprachfrequenzsignale zu kommunizieren.

15. System gemäß einem der Ansprüche 7 bis 14, dadurch gekennzeichnet, daß die Auflegeinrichtungen Einrichtungen zum automatischen Auflegen sind.

## Claims

1. Process for establishing a telephone communication between a calling equipment item (PT; MT; TC) linked to a telephone network (RT) and a called equipment item (PT'; ST; TC'; RE) linked to an internal line of an automatic telephone exchange (A) itself linked directly to the said telephone network (RT), characterized in that it comprises the following steps:
(a) a reading device (100) equipped with a means (116) of reading an identifier associated with a calling user and registered in an identification or authentication card (CAM1) is provided in parallel with the line of the calling equipment item;
(b) an acceptance and routing device is provided, linked to another internal line of the automatic telephone exchange (A),
(c) the identifier of a user wishing to connect the calling equipment item to the called equipment item is read with the aid of the reading device,
(d) dialling is performed with the aid of the calling equipment item or of the reading device associated therewith, this dialling identifying the acceptance and routing device (200) with a view to establishing a communication between the reading device (100) and the acceptance and routing device (200) via the telephone network (RT) and the automatic telephone exchange (A),
(d') the acceptance and routing device is set off-hook,
(e) an identification and/or an authentication of the calling user is performed in the course of the communication established, at least with the aid of the acceptance and routing device (200),
(f) in the case in which identification or authentication is completed, a call transfer to the called equipment item via the automatic telephone exchange (A) is performed, by dialling at the acceptance and routing device (200), so as thereby to establish a communication between the calling equipment item and the called equipment item, and then the acceptance and routing device (200) is set on-hook,
(g) in the case in which identification or authentication is not completed, no transfer is performed and the acceptance and routing device (200) is set on-hook,
the acceptance and routing device then becoming, in both cases (f) and (g), free for the reception of calls originating from other calling equipment items with which a reading device is also associated.

2. Process according to Claim 1, characterized in that step (c) is carried out by an operation of reading a microprocessor card (CAM1) associated with a user.

3. Process according to Claim 2, characterized in that step (e) is carried out via the following substeps:
(i) despatching of a random number to the reading device (100) by the acceptance and routing device;
(ii) calculation, by the microprocessor card (CAM1) associated with the user, of a first certificate on the basis of the said random number and of an identifier contained in the said card,
(iii) despatching of the said certificate and of the said identifier to the acceptance and routing device (200), by the reading device,
(iv) identical calculation, in the said acceptance and routing device, of a second certificate on the basis of the said random number and of the said identifier, and
(v) comparison, by the acceptance and routing device (200), of the first and second certificates.

4. Process according to Claim 3, characterized in that substep (iv) is performed in a supervisory microprocessor card (CAM2) inserted into a microprocessor card reader (216) forming part of the acceptance and routing device (200).

5. Process according to one of Claims 1 to 4, characterized in that step (f) is carried out with the aid of a transfer number determined by the acceptance and routing device (200) from at least one cue chosen from the group comprising the identifier associated with the calling user, a parameter transmitted by the reading device to the acceptance and routing device, and a parameter contained in the acceptance and routing device.

6. Process according to one of Claims 1 to 5, characterized in that the communication between the two devices (100, 200) is performed by voice-frequency signals.

7. System for communicating between a calling equipment item (PT; MT; TC) linked to a telephone network (RT) and a called equipment item (PT'; ST; TC'; RE) linked to an internal line (LP) of an automatic telephone exchange (A) itself linked to the said telephone network, of the type comprising:
- an acceptance and routing device (200) connected to the automatic telephone exchange (A),
- means (202, 212) provided in the acceptance and routing device (200) for setting it off-hook when it is called by a calling equipment item, in such a way as to establish a communication between the calling equipment item and the acceptance and routing device,
- means (102, 116, CAM1; 202; 216, CAM2) provided in the acceptance and routing device (200) for allowing the latter to establish in the course of this communication an identification and/or an authentication of the calling user;
- means (202, 212, 214) provided in the acceptance and routing device for performing in the case in which identification and/or authentication has successfully completed, a transfer of the call to the called equipment item via the automatic telephone exchange, and
- means for setting the acceptance and routing device (200) on-hook either in the event of non-establishment of identification or of entitlement, or after transfer to the called equipment item, so as thereby to free the acceptance and routing device and allow it to receive calls originating from other calling equipment items with which a reading device is also associated,
the system being characterized in that it furthermore comprises:
- a device for reading and sending calls (100), connected in parallel with the line (LT) of the calling equipment item;
- means provided (102, 116) in the device for reading and sending calls so as to perform the reading of a card (CAM1) containing a cue associated with a calling user, which cue is used for identification thereof and/or authentication thereof,
- means (102, 112, 114) provided in the device for reading and sending calls so as to perform, in response to a dialling identifying the acceptance and routing device (200), the call from the calling equipment item to the acceptance and routing device (200) via the automatic telephone exchange (A),
and in that:
- the acceptance and routing device (200) is linked to another internal line of the automatic telephone exchange, and
- the communication between the device for reading and sending calls (100) and the acceptance and routing device (200) is established via the telephone network (RT) and the automatic telephone exchange, which are linked directly to one another.

8. System according to Claim 7, characterized in that the device for reading and sending calls (100) comprises a means (116) for reading a user microprocessor card (CAM1).

9. System according to Claim 7 or 8, characterized in that the acceptance and routing device comprises a means for reading a supervisory microprocessor card (CAM2).

10. System according to Claim 9, linked with Claim 8, characterized in that the means for determining the identity and/or the entitlement of the calling user comprise:
(i) means (202, 212) provided in the acceptance and routing device for despatching a random number to the device for reading and sending calls (100),
(ii) means provided in the user microprocessor card (CAMl) for calculating a first certificate from the said random number and from a user identifier contained in the said user microprocessor card,
(iii) means (102, 112) provided in the device for reading and sending calls so as to despatch the said identifier and the said certificate to the acceptance and routing device (200),
(iv) means provided in the supervisory microprocessor card (CAM2) for calculating a second certificate from the said random number and from the identifier received from the device for reading and sending calls,
(v) means (202) provided in the acceptance and routing device (200) for comparing the first and second certificates.

11. System according to one of Claims 7 to 10, characterized in that the call transfer means comprise means (202) for dialling a transfer number determined from at least one cue chosen from the group comprising the identifier associated with the calling user, a parameter transmitted by the device for reading and sending calls to the acceptance and routing device, and a parameter contained in the acceptance and routing device.

12. System according to one of Claims 7 to 11, characterized in that the acceptance and routing device (220) furthermore comprises means (202, 204) for determining whether or not the user identifier is contained in a list of prohibited users.

13. System according to Claim 12, linked with Claim 9, characterized in that the said list is stored in the supervisory microprocessor card (CAM2).

14. System according to one of Claims 7 to 13, characterized in that the two devices (100, 200) each comprise means (114; 214) for communicating by voice-frequency signals.

15. System according to one of Claims 7 to 14, characterized in that the means for setting off-hook are means for automatically setting off-hook.
